(19) Europäisches Patentamt
European Patent Office
Office européen des brevets

(11) **EP 1 868 383 B1**

(12) **FASCICULE DE BREVET EUROPEEN**

(45) Date de publication et mention de la délivrance du brevet:
**30.07.2014 Bulletin 2014/31**

(51) Int Cl.:
***H04N 7/01*** *(2006.01)*

(21) Numéro de dépôt: **07110108.3**

(22) Date de dépôt: **12.06.2007**

(54) **Détection de la phase de mouvement d'une séquence de trames vidéo**

Bewegungsphasendetektion einer Videohalbbildersequenz

Motion phase detection of a video fields sequence

(84) Etats contractants désignés:
**DE FR GB IT**

(30) Priorité: **13.06.2006 FR 0605254**

(43) Date de publication de la demande:
**19.12.2007 Bulletin 2007/51**

(73) Titulaire: **STMICROELECTRONICS SA**
**92120 Montrouge (FR)**

(72) Inventeurs:
- **Eymard, Frankie**
  **38360 SASSENAGE (FR)**
- **Barnichon, Christophe**
  **38360 SASSENAGE (FR)**

(74) Mandataire: **Cabinet Plasseraud**
**52, rue de la Victoire**
**75440 Paris Cedex 09 (FR)**

(56) Documents cités:
**WO-A-91/06182    US-B1- 6 480 232**

**Description**

L'invention concerne la détection de la cadence d'une séquence de trames vidéo.

La détection de la cadence d'une séquence de trames est basée sur la recherche d'un motif de cadence, par exemple « 10010 » parmi une séquence de bits représentatifs du mouvement d'une trame à l'autre.

Par cadence d'une séquence de trames, on entend donc une répétition d'au moins un motif de cadence dans la séquence de bits représentatifs du mouvement d'une trame à l'autre.

La détection de cadence peut permettre de trouver le format source d'une séquence de trames vidéo, ou de détecter une éventuelle absence de mouvement d'objet dans les images ("still pictures" en anglais).

Il existe en effet plusieurs formats source. Par exemple, une caméra vidéo peut permettre de capturer 50 ou 60 images par seconde. Le format film prévoit que les images filmées sur pellicule sont capturées avec une fréquence de 24 ou 25 images par seconde. Le nombre d'images par seconde peut être encore plus faible, par exemple autour de 8 images par seconde pour certains dessins animés japonais.

Il existe également plusieurs formats d'affichage. Le standard PAL ("Phase Alternating Line" en anglais), principalement utilisé en Europe, prévoit l'affichage de 50 trames par seconde. Le format NTSC ("National Television Standards Committee" en anglais), principalement utilisé aux Etats-Unis, prévoit l'affichage de 60 trames par seconde.

Par ailleurs, les standards usuellement utilisés en télévision prévoient un codage des images source en trames entrelacées (d'une demi-image) successives comprenant des trames ayant des lignes de pixels paires d'une image à afficher donnée entrelacées, c'est-à-dire alternées, avec des trames ayant seulement des lignes de pixels impaires d'une image à afficher suivante.

Plus généralement, selon le mode de balayage, une image est décomposée en une trame, deux trames, voire davantage. Dans la présente demande, le terme "trame" recouvre aussi bien une image complète qu'une demi-image, voire une plus petite fraction d'image.

Par "séquence de trames vidéo", on n'entend pas se limiter au format vidéo en particulier, mais simplement indiquer qu'une trame correspond à une image ou à une portion d'image.

Ainsi, lorsqu'une séquence d'images au format film à 25 images par seconde est encodée selon le format PAL à 50 Hz, chaque image filmée est décomposée en deux trames entrelacées.

Selon un autre exemple, lorsqu'une séquence d'images vidéo à 50 images par seconde est encodée selon le standard PAL, les images sont réduites chacune à une trame d'une demi-image, de parités respectives alternées.

Selon un autre exemple, lorsqu'une séquence d'images au format film à 24 images par secondes est encodée selon le format NTSC à 60 trames par seconde, chaque séquence de quatre images filmées consécutives est convertie en une séquence de dix trames d'une demi-image. Parmi ces dix trames, les trois premières proviennent par exemple d'une même première image filmée, les deux trames suivantes proviennent d'une deuxième image filmée, etc. Ainsi, deux des trois premières trames sont identiques. Une telle conversion est dite conversion 3:2 ("3-2 pulldown" en anglais).

Il existe bien d'autres types de conversion. On peut citer la conversion 2:2 ("2-2 pulldown" en anglais) d'un format film à 24 ou 25 images par seconde vers le format PAL à 50 Hz, la conversion 2:3 ("2-3 pulldown" en anglais) d'un format à 24 images par seconde vers un format NTSC, les conversions 3:2:3:2:2 lorsqu'une station de télévision élimine une trame sur douze d'une séquence provenant d'images au format film, les conversions 2:2:2:4 et 2:3:3:2 d'images capturées selon un format DVCAM, les conversions 5:5, 6:4 ou 8:7 pour la conversion d'images de dessins animés, etc.

La détection de cadence est basée sur des comparaisons de pixels appartenant à des trames successives, indicées n, afin de déterminer l'existence de mouvements d'une trame à l'autre. En effet, une conversion conduit typiquement à des variations brutales du mouvement. Par exemple, dans cas d'une conversion 3:2, trois premières trames n-3, n-2, n-1, proviennent d'une même image filmée, de sorte que sensiblement aucun mouvement n'est détecté de l'une à l'autre de ces trames. Les deux trames suivantes n, n+1 proviennent d'une autre image filmée : un mouvement relativement élevé peut être détecté entre la troisième trame n-1 et la quatrième trame n, tandis que le mouvement entre la quatrième trame n et la cinquième trame n+1 est sensiblement nul. En analysant une séquence de bits représentatifs du mouvement, dite séquence de mouvements, déterminée par des comparaisons de pixels sur une séquence de trames, on peut repérer une répétition d'un motif et donc détecter qu'une conversion a été effectuée. La détection de cadence est ainsi basée sur une analyse de séquence de mouvements.

La détection de cadence peut être utilisée dans des applications variées. Par exemple, un détecteur de cadence peut être couplé à un dispositif de désentrelacement, ou bien encore à un dispositif de compression. En effet, si une cadence particulière est détectée, le traitement peut être effectue relativement simplement, par de simples fusions de trames dans le cas d'un désentrelacement par exemple.

Toutefois, en plus d'une conversion, une séquence d'images peut subir des répétitions et/ou suppressions de trames plus ou moins régulières.

En particulier, il peut être nécessaire d'adapter des paramètres de balayage ("scanning parameters" en anglais) d'un format source à un format d'affichage. Les paramètres de balayage comprennent entre autres le nombre de trames pour une image (typiquement une ou deux), le nombre de lignes par image, le nombre de lignes pour une trame impaire et pour une trame paire, le nombre de lignes actives par image, le nombre d'échantillons par ligne, le nombre d'échantillons actifs par ligne, la fréquence d'horloge d'échantillonnage ("sample rate" en anglais), la fréquence de synchronisation horizontale ("line rate" en anglais), la fréquence de synchronisation verticale ("field rate" en anglais), un déphasage entre un signal de synchronisation horizontale et un signal de synchronisation verticale, etc.

Pour adapter ces paramètres de balayage d'un format source à un format d'affichage, on peut procéder à des répétitions ou suppressions régulières de trames. On parle de conversion de format de balayage. Par exemple, pour adapter un format à 50 images par secondes vers un format à 60 images par seconde, on peut procéder à une répétition d'une trame toutes les cinq trames.

Pour d'autres formats source et/ou d'affichage, par exemple un format source à 59,94 images par seconde et un format d'affichage à 60 images par secondes, une régulation de flux peut être mise en oeuvre à l'aide d'une boucle de régulation.

Plus généralement, il existe de nombreux traitements d'image, par exemple des traitements d'amélioration du contraste, de la qualité, des traitements de désentrelacement et autres, qui conduisent à une mémorisation provisoire des données d'images dans des mémoires tampon. Là encore, une boucle de régulation de flux peut être utilisée pour contrôler le remplissage des mémoires tampon et en particulier éviter tout dépassement ("overflow" en anglais).

Une boucle de régulation permet d'asservir tout ou partie de ces paramètres au format désiré. Des ordres de régulation sont utilisés, par exemple des ordres de régulation d'horloge agissant sur la fréquence d'horloge d'échantillonnage, ou bien des ordres de régulation de lignes qui contrôlent le nombre de lignes balayées par trame en agissant par exemple sur la fréquence de synchronisation horizontale. Les ordres de régulation peuvent également comprendre des ordres de régulation de trames, qui conduisent à répéter ou à supprimer une trame. Ces opérations au niveau des trames peuvent en particulier avoir lieu lorsque la boucle de régulation est en régime transitoire, afin d'accélérer l'établissement d'un régime permanent. Une boucle de régulation de flux peut ainsi conduire à des répétitions/suppressions irrégulières de trames.

Ainsi, des suppressions ou répétitions de trames peuvent être effectuées, en particulier à des fins de régulation de flux.

Ces suppressions ou répétitions de trames affectent la détection de cadence. En effet, pour par exemple une séquence de trames résultant d'une conversion 3:2, on peut s'attendre à une séquence de mouvements du type « 100101001010010... ». Une suppression de la troisième trame par exemple conduit à une séquence de mouvement « 10101001010010... », ce qui correspond à une conversion 2:2 sur les six premières trames. Une répétition de la troisième trame conduit à une séquence de mouvement « 1000101001010010... ». Dans ces deux cas, on risque une fausse détection de rupture de cadence, voire une fausse détection de cadence.

Le document EP1198137 représente un système de détection de cadence prenant en entrée la séquence de trames vidéos et qui produit une cadence basée sur la détection de mouvements d'une trame à l'autre. L'invention vise à s'affranchir des effets des suppressions ou répétitions de trames sur la détection de cadence. L'invention est définie par les revendications attenantes.

D'autres particularités et avantages de la présente invention apparaîtront dans la description ci-après.

La figure 1 montre schématiquement un exemple de système de traitement selon un mode de réalisation de l'invention.

La figure 2 montre schématiquement un exemple de système de traitement selon un autre mode de réalisation de l'invention.

La figure 3 montre schématiquement un exemple de système de traitement selon un mode de réalisation de l'invention.

La figure 4 montre schématiquement et de façon plus détaillée le détecteur de cadence illustré sur la figure 3.

La figure 5 est un organigramme de procédé exécutable par l'unité de contrôle de détection représentée sur la figure 4.

## Exemple de système de traitement

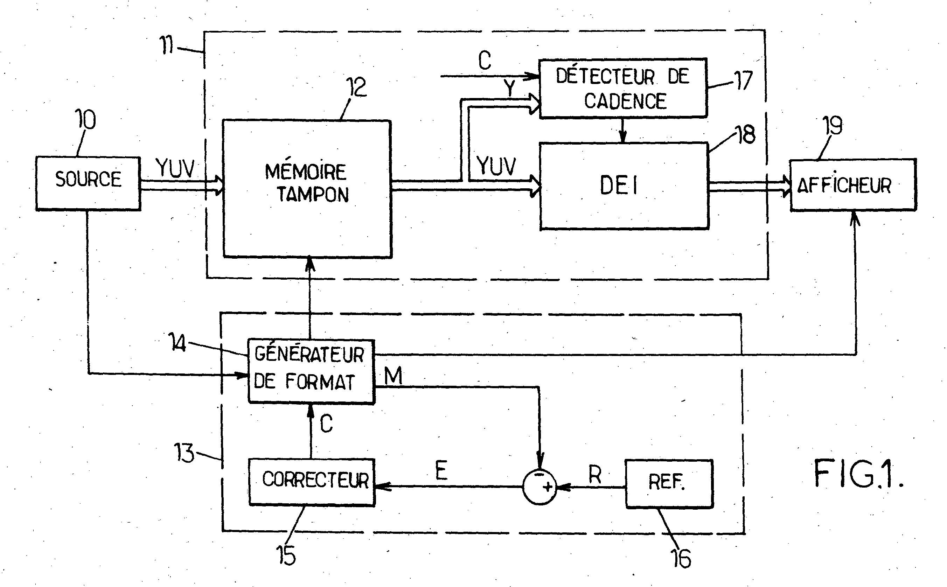

La figure 1 montre un exemple de système de traitement. Sur les figures 1 à 4, les flux vidéo sont représentés par des flèches en traits épais, tandis que les signaux de contrôle sont représentés par des flèches en traits fins.

Une séquence de trames entrelacées issue d'une source 10 est reçue par une unité de traitement d'images 11 visant par exemple à désentrelacer les images de la séquence. Les données d'images correspondant à cette séquence de trames sont mémorisées provisoirement dans une mémoire tampon 12. Une boucle de régulation de flux 13 peut être utilisée pour contrôler le remplissage de la mémoire tampon et en particulier éviter tout dépassement de capacité ("overflow" en anglais).

La boucle de régulation de flux 13 comprend un générateur de format 14 commandé par un vecteur de commande C. Un vecteur de mesure M est comparé à un vecteur de référence R issu d'un générateur de format de référence 16. Un dispositif correcteur 15 permet de déterminer le vecteur de commande C à partir du résultat de la comparaison.

Le vecteur de commande C comprend des ordres de régulation, par exemple des ordres de régulation d'horloge ou bien des ordres de régulation de lignes. Les ordres de régulation peuvent également comprendre des ordres de régulation de trames, qui conduisent à répéter ou à une trame.

Le système représenté sur la figure 1 comprend également un détecteur de cadence 17 et un dispositif de traitement 18, par exemple un dispositif de désentrelacement ou DEI.

Dans le mode de réalisation illustré, seuls les pixels de luminance Y ("luma pixels" en sont par le détecteur de cadence 17. Alternativement, une détection du mouvement plus complexe et plus fiable pourrait être mise en oeuvre sur la base de comparaisons de pixels de chrominance ("chroma pixels" en anglais).

Le détecteur de cadence 17 est agencé pour utiliser une partie du vecteur de commande C, à savoir les éventuels ordres de régulation de trames. Ainsi, le détecteur de cadence 17 peut par exemple recevoir le vecteur de commande C en entrée.

Le détecteur 17 transmet des données au dispositif de désentrelacement 18, typiquement un motif de cadence éventuellement détecté. Ainsi, si par exemple une conversion depuis un format film est détectée, la séquence peut être reconstruite relativement facilement, en effectuant une fusion de deux trames successives correspondant initialement à la même image filmée.

La séquence désentrelacée est ensuite reçue par un dispositif d'affichage 19.

Tout ou partie du système de traitement de la figure 1 peut être intégré dans un poste de télévision, ou dans un décodeur par exemple.

**Autre exemple de système de traitement**

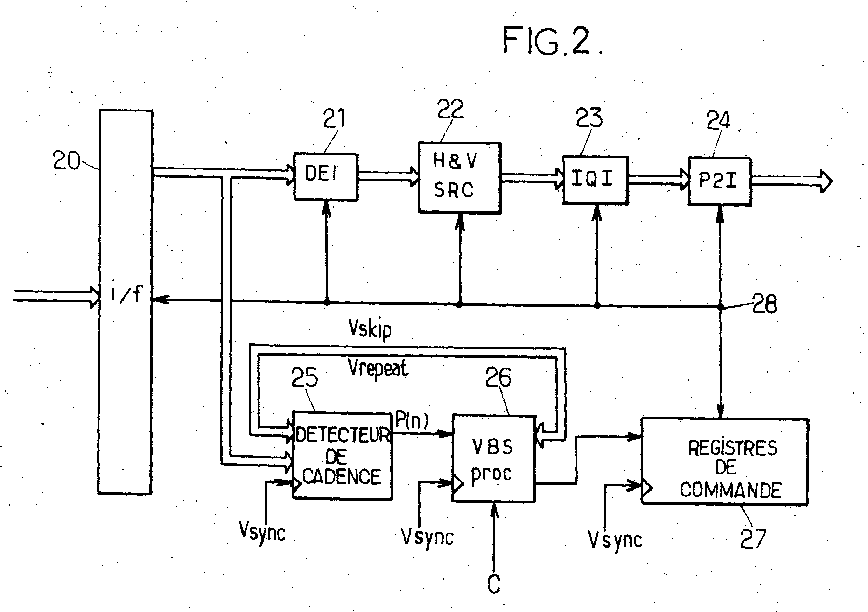

En référence à la figure 2, un dispositif de désentrelacement 21 ou DEI permet de convertir une séquence de trames vidéo d'un format entrelacé à 480 lignes par image (noté « 480i ») vers un format progressif (noté « 480p »). Un dispositif de re-échantillonnage 22 ou H&V SRC (de l'anglais "sample rate converter" ou "rescaler") permet de passer à un format progressif à 1080 lignes par image (noté « 1080p »). Le système de traitement comprend également un dispositif d'amélioration de la qualité d'image 23 ou IQI (de l'anglais "image quality improvement"). Un dispositif d'entrelacement 24 ou P2I (de l'anglais "progressive to interlace") permet de passer à un format entrelacé à 1080 lignes par image (noté « 1080i »).

Le désentrelaceur 21 utilise deux trames ou plus pour reconstruire une image complète. Aussi le flux vidéo est-il temporairement mémorisé dans une mémoire tampon accessible par l'interface 20. Les données mémorisées sont adressées par un bus 28.

Le bus 28 est commandé par des registres de commande 27, eux-mêmes contrôlés par un processeur de VBS 26 (de l'anglais "video buffer sequence") comprenant un automate. Si un détecteur de cadence 25 comprenant des moyens de recherche de motifs de cadence détecte une conversion, par exemple une conversion 2:2, l'automate du processeur 26 interprète un micro-code, stocké par exemple sous la forme d'un tableau (non représenté), et correspondant à la conversion détectée, pour réaliser une séquence VBS. La séquence VBS comprend des séquences d'indices de trames qui doivent être adressées par le bus 28 pour que le désentrelacement soit effectué de façon optimale par le DEI 21.

Les dispositifs 25, 26 et 27 sont synchronisés par un signal de synchronisation verticale Vsync.

Le processeur de VBS 26 mémorise ainsi un tableau pour chaque conversion détectable. Si en outre le nombre d'images par seconde doit passer de 50 à 60, le tableau comprend une ou des instructions de répétition régulière de trame. Ainsi, à intervalles réguliers, le bus 28 adresse deux fois les mêmes trames, et ce afin de passer à 60 images par seconde.

Toutefois, les trames reçues par l'interface 20 sont également utilisées par le détecteur de cadence 25. le processeur de VBS 26 applique ainsi des ordres de répétition de trames préalablement à la détection de cadence.

Le détecteur de cadence 25 est agencé pour recevoir en entrée un signal Vrepeat comprenant une indication d'un ordre de répétition de trame du fait du processeur de VBS 26. L'utilisation du signal Vrepeat permet d'éviter les fausses de cadence dues à des répétitions régulières de trames.

Le détecteur de cadence 25 est en outre agencé pour recevoir en entrée un signal Vskip indiquant des ordres de suppression de trame. Ainsi, si par exemple le nombre d'images par seconde doit passer de 60 à 50, le détecteur de cadence prend en compte les ordres de suppression de trame du fait du processeur de VBS 26.

On peut en outre doter le processeur de VBS 26 d'une entrée pour recevoir un signal de régulation C provenant d'une boucle de régulation de flux (non représentée sur la figure 2). Le processeur de VBS interprète les ordres de régulation de flux afin d'adapter la séquence d'adressage des trames et de générer les signaux Vrepeat et Vskip. Les signaux Vrepeat et Vskip indiquent ainsi les ordres de répétition de trame et les ordres de suppression de trame respectivement, non seulement du fait du processeur de VBS 26, mais également du fait de la boucle de régulation de flux.

Tout ou partie du système de traitement de la figure 2 peut être intégré dans un poste de télévision, ou dans un décodeur par exemple.

**Autre exemple de système de traitement**

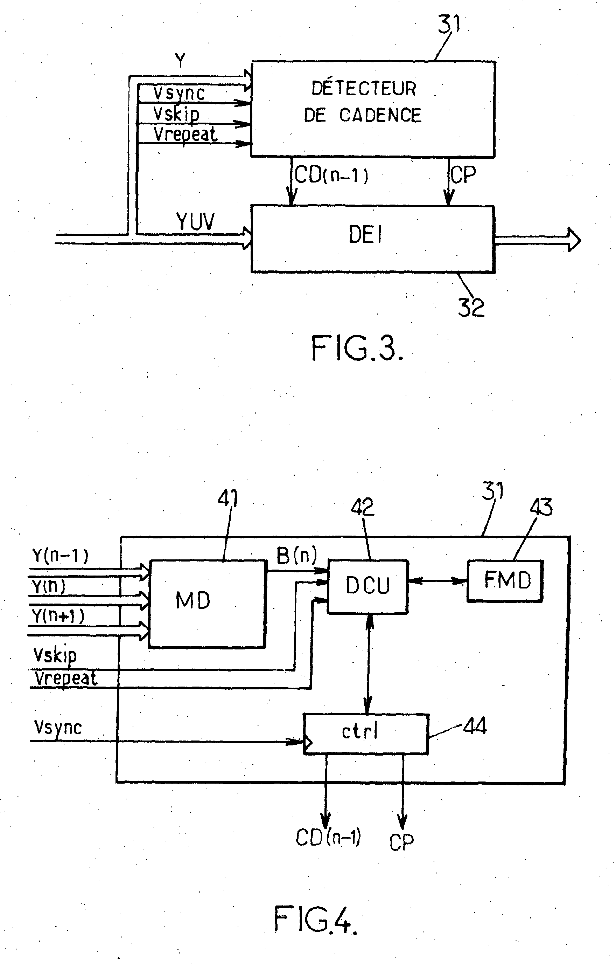

La figure 3 montre un exemple de système de traitement d'une séquence de trames entrelacées. La système comprend un détecteur de cadence 31 et un dispositif de désentrelacement 32. Bien entendu, le détecteur de cadence selon l'invention peut être utilisé dans d'autres applications. A titre d'exemple, le détecteur de cadence peut être relié à un dispositif de compression, afin de permettre de repérer des trames redondantes et de contribuer ainsi à une compression efficace.

Le détecteur de cadence 31 comprend une entrée de synchronisation verticale pour recevoir un signal de synchronisation verticale Vsync marquant le passage d'une trame à l'autre.

Le détecteur de cadence 31 comprend également une entrée d'ordre de répétition de trame, pour recevoir une signalisation d'ordres de répétition de trames préalablement appliqués aux trames de la séquence d'images. Cette signalisation comprend un signal Vrepeat.

Le détecteur de cadence 31 comprend également une entrée de d'ordres de suppression de trame, pour recevoir une signalisation d'ordres de suppression de trames préalablement appliqués aux trames de la séquence d'images. Cette signalisation comprend un signal Vskip.

Les signaux Vrepeat et Vskip peuvent être binaires, un '1' indiquant un ordre de répétition et un ordre de suppression respectivement.

Le détecteur de cadence 31 peut transmettre au DEI 32 un motif de cadence (ou CP, de l'anglais "cadence pattern") éventuellement détecté pour une trame ou une partie de trame, et des données de statut (ou CD(n-1), de l'anglais cadence data").

**Détecteur de cadence**

La figure 4 montre de façon plus détaillée le détecteur de cadence 31 représenté sur la figure 3.

Le détecteur de cadence 31 comprend un détecteur de mouvement 41 ou MD (de l'anglais "motion detector") recevant en entrée des trames de luminance courante Y(n), précédente Y(n-1) et suivante Y(n+1).

Dans le mode de réalisation illustré par la figure 4, la détection de cadence est effectuée par bloc ("block-based cadence détection" en anglais).

Les trames sont en effet découpées en blocs de 16x8 pixels, c'est-à-dire que les images correspondantes sont partagées en blocs de 16x16 pixels. Le format 16x16 pixels est classiquement utilisé en compression, de sorte que l'utilisateur est habitué à voir apparaître des artefacts sur les frontières de blocs de cette taille. En outre, les zones provenant de sources différentes ont souvent des frontières communes avec ce découpage classique en blocs de 16x16 pixels. On limite ainsi le nombre de blocs à cheval sur plusieurs zones. Bien entendu, l'invention n'est pas limitée par la taille des blocs.

Ainsi, le détecteur de mouvement 41 permet de déterminer une valeur de phase de mouvement de bloc B(n) pour chaque bloc de la trame courante.

Le détecteur de cadence 31 comprend en outre une unité de contrôle de la détection 42 ou DCU (de l'anglais "détection control unit"). Le DCU 42 effectue une détection de cadence pour chaque bloc en utilisant des données de cadence et des motifs de cadence mémorisés dans des registres d'une unité de contrôle 44.

Ces registres sont partagés entre le DCU 42 et un détecteur de mode film 43 ou FMD (de l'anglais "film mode detector").

Certains des registres destinés à stocker des données de cadence sont doubles ("double-buffered registers" en anglais) et synchronisés sur le signal de synchronisation verticale VSync. On peut ainsi à la fois mettre à jour un registre lors du traitement de la trame courante n et utiliser la valeur de ce registre pour la trame précédente n-1.

Certains des registres destinés à stocker des données de cadence, par exemple un historique des valeurs de mouvements de phase de bloc mis à jour par le DCU 42, sont prévus en autant d'exemplaires que de blocs par trame, afin de permettre une détection par bloc.

Pour chaque bloc, le FMD 43 permet de détecter un éventuel mode film en effectuant une recherche de motif de cadence dans chaque historique des valeurs de mouvements de phase de bloc. En cas de détection d'un mode film sur un bloc, un drapeau de mode film correspondant à ce bloc est positionné.

Les blocs identifiés comme résultant d'une conversion depuis un format film sont destinées à être désentrelacés par le DEI par une simple fusion de trames ("field merging" en anglais).

De façon avantageuse, on peut prévoir en outre un détecteur d'image fixe (non représenté) ou SMD (de l'anglais "still mode detector"). Pour chaque bloc, le SMD positionne un drapeau d'image fixe lorsqu'une absence de mouvement est détectée pour ce bloc. La valeur de ce drapeau est transmise au DEI, de sorte que le désentrelacement peut également être effectué de façon relativement simple.

Détecteur de mouvement

Le détecteur de mouvement 41 met en jeu des comparaisons de trames, et utilise différentes métriques à cet effet.

Toutefois, même dans le cas de trames identiques, les différences mesurées risquent d'être non nulles du fait du bruit. Aussi utilise-t-on avantageusement un détecteur de mouvement capable de fonctionner avec des signaux sur plusieurs niveaux plutôt que simplement des signaux binaires. Dit autrement, on préférera travailler avec des probabilités de mouvement plutôt qu'avec une simple indication de la présence ou de l'absence du mouvement.

En outre, afin de réduire le nombre d'erreurs de détection dans des zones sans mouvement, le détecteur de mouvement 41 peut comprendre un filtre passe-bas (non représenté) sur les pixels de luminance ou LLPF (de l'anglais "luma low-pass filter").

Ce filtrage d'entrée peut se révéler insuffisant, en particulier lorsque le contraste est relativement faible. Des seuils, de valeurs déterminables empiriquement, peuvent être introduits pour réduire le taux de fausse détection. On peut également prévoir de rendre ces valeurs de seuil variables en fonction d'une estimation du contraste et du bruit de l'image. Ainsi, si les objets sont peu contrastés, les valeurs des seuils peuvent être relativement faibles. Les mouvements sont ainsi détectables même pour de relativement faibles valeurs de métriques ou de différences de métriques. On peut aussi prévoir de rendre ces valeurs variables en fonction de la taille des valeurs de luminance (8 bits ou 10 bits).

Dans le mode de réalisation illustrée par les figures 3 et 4, les métriques BBD ("block-based sum of the luma differences" en anglais) et CFD ("consecutive field difference" en sont utilisées.

On utilise les x, y respectivement de colonne et de ligne, pour situer un pixel dans une trame. Les trames sont elles-mêmes indicées n. Pour chaque pixel situé à une positon (x,y) sur une trame n, des métriques de mouvement sont ainsi calculées. Pour plus de clarté, on appellera respectivement A(x,y,n), B(x,y,n), C(x,y,n) et D(x,y,n) les valeurs de pixels de luminance F(x,y,n+1), F(x,y+1,n), F(x,y-1,n) et F(x,y,n-1) à partir desquelles sont effectuées les comparaisons entre trames.

Les métriques BBD et CFD sont ainsi définies par:

$$BBD = \sum_{bloc} |A - D| \qquad (1),$$

et

$$CFD = \sum_{bloc} MIN(|A - B|, |A - C|) \qquad (2).$$

De façon générale, dans le cas d'une détection de cadence par partie de trame, on calcule la somme des différences absolues entre A(x,y,n) et D(x,y,n) sur toute la partie de trame, et on calcule la somme des minima $MIN(|A-B|, |A-C|)$ sur toute la de trame :

$$BBD = \sum_{partie} |A - D|$$

$$CFD = \sum_{partie} MIN(|A - B|, |A - C|)$$

Dans le cas non représenté d'une détection de cadence par trame, on peut calculer les sommes sur les blocs de la trame des métriques BBD et CFD calculés à l'aide des relations (1) et (2) respectivement. On peut par exemple choisir des blocs de 80x80 pixels.

En outre, on définit les métriques de mouvement M12, M23 et M13 comme les mouvements respectivement entre les trames précédente (n-1) et courante (n), entre les trames courante (n) et suivante (n+1), et entre les trames précédentes (n-1) et suivante (n+1).

M12 est calculée en tant que somme, pour la trame précédente (n-1), et sur toute la partie de trame ou sur toute la trame, des minima $MIN(|A-B|, |A-C|)$ supérieurs à un seuil de bruit.

M13 est calculée en tant que somme, pour la trame courante (n), et sur toute la partie de trame ou sur toute la trame, des différences absolues entre A(x,y,n) et D(x,y,n).

M23 est calculé en tant que somme, pour la trame courante (n), et sur toute la partie de trame ou sur toute la trame, des minima $MIN(|A - B|,|A - C|)$ supérieurs au seuil de bruit.

Dans ce mode de réalisation, les valeurs de M12, M23 et M13 sont ensuite utilisées pour déterminer la valeur d'un seuil programmable k_cfd:

Si $\dfrac{M12}{M13} > k\_cfd3$ , le seuil k_cfd3 prenant par exemple la valeur 0,6, alors le seuil programmable k_cfd prend la valeur d'un k_cfd1, par exemple 2,1. Dans le cas contraire, le seuil programmable k_cfd prend la valeur d'un seuil k_cfd2, par exemple 1, 1.

Dans une variante, on plutôt le test suivant pour programmer la valeur du seuil k_cfd :

Si $\dfrac{M12+M23}{M13} > k\_cfd3$ , le seuil k_cfd prend la valeur k_cfd1. Dans le cas contraire, le k_cfd prend la valeur k_cfd2.

Le seuil programmable k_cfd peut ensuite être utilisé pour déterminer la valeur de mouvement de phase de la partie de trame, en utilisant par exemple le test suivant :

Si $\dfrac{M12}{M23} > k\_cfd$ , bMove = 0, et bMove=1 dans le cas contraire.

Le bit bMove est appelé bit de mouvement. Le bit bMove représente le mouvement entre deux trames successives.

Avantageusement, on utilise également une représentation du mouvement entre deux trames de même parité, c'est-à-dire une trame (n-2) et une trame (n) par exemple. Cette représentation comprend un bit de bRepeat dont la valeur est estimée à partir des comparaisons entre les pixels A(x,y,n) et D(x,y,n). Par exemple, le bit bRepeat est positionné si le BBD sur la partie de trame est inférieur à un seuil t_repeat, représentatif d'une répétition entre la trame (n-2) et la trame (n).

Dans le cas d'une détection de cadence par trame, on peut pour chaque bloc de 8Ox8O pixels, calculer les métriques BBD et CFD pour ce bloc, à l'aide des relations (1) et (2). La BBD de chaque bloc de 80x8O pixels est comparée au seuil t_repeat. Un seul bit bRepeat est positionné pour toute la si et seulement si toutes les BBD sont inférieures au seuil t_repeat.

La phase de mouvement de partie de trame ou de trame P(n) ainsi déterminée est un vecteur comprenant les bits bMove et bRepeat pour cette partie de trame ou pour cette trame.

Dans le cas d'une détection par bloc, la phase de mouvement de bloc B(n) de chaque bloc est un vecteur comprenant les bits bMove et bRepeat pour ce bloc.

## Registres de contrôle et de statuts

L'unité de contrôle (référence 44 sur la figure 4) permet de stocker un certain nombre de registres, par le DCU 42 et le FMD 43. Le tableau ci-dessous représente les registres de cadence ainsi stockés :

| Taille | Nom | description |
|---|---|---|
| 1x40 bits | tbMove | 1 en cas de détection de mouvement entre deux trames successives |
| 1x40 bits | tbSkip | 1 en cas d'ordre de suppression préalable de trame |
| 1x40 bits | tbRepeat | 1 en cas de détection d'absence de mouvement entre deux trames de même parité |
| 1 bit | bFilmMode | 1 si mode film |
| 8 bits | ucPattern | Indice de motif |
| 8 bits | ucPhase | Indice de phase de cadence |

Pour chaque bloc, on prévoit un jeu de registres comprenant un registre tbMove, un registre bFilmMode, un registre ucPattern et un registre ucPhase. Ces trois derniers registres sont doubles, afin que leur valeur pour une trame précédente puisse être utilisée tandis que leur valeur pour la trame courante est écrite.

Par ailleurs, l'unité de contrôle permet également de mémoriser, pour chaque motif de cadence, un de registres de motifs de cadence comprenant les registres ucLength, ucDelay et tbPhase. Ces registres sont décrits plus loin.

**Unité de contrôle de la détection (DCU)**

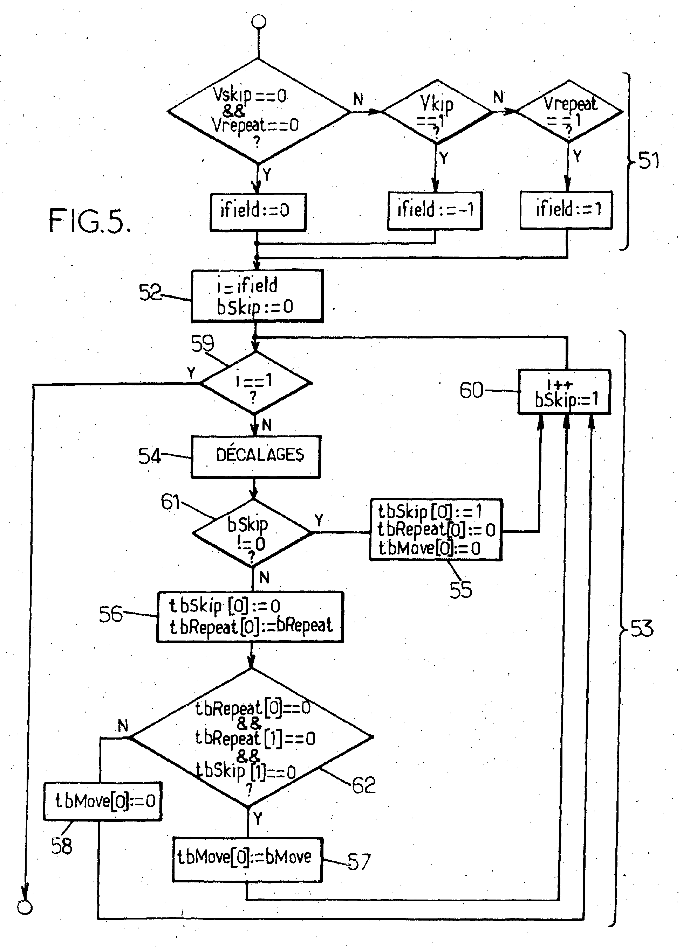

Pour chaque bloc, le DCU commande la détection de cadence en utilisant la valeur de la phase de mouvement de bloc B(n) calculée pour la trame courante (n).
Le DCU met à jour des registres de cadence de par exemple 40 bits tbRepeat, tb Move et tbSkip. Ces registres sont mémorisés dans l'unité de contrôle (référence 44 sur la figure 4). On compte un seul registre tbSkip. En revanche, on dénombre autant de registres tbMove et tbRepeat que de blocs par trame.
Le DCU prend en compte les signaux Vskip et Vrepeat de signalisation d'ordres de suppression et de répétition de trame respectivement.
L'organigramme de la figure 5 montre un exemple de procédé de mise à jour de ces registres, effectué pour chaque trame courante.
Le procédé comprend des étapes, référencées 51, pour affecter une valeur à une variable en fonction des valeurs des signaux Vskip et Vrepeat. La variable ifield prend la valeur -1 si Vskip est positionné, 1 si Vrepeat est positionné, et 0 si aucun des signaux Vskip, Vrepeat n'est positionné.
Une boucle 53 est mise en oeuvre, et indicée par une variable i prenant initialement la valeur de la variable ifield (étape 52). Le nombre d'exécutions de la boucle dépend de la valeur de la variable ifield.
Un test 59 est effectué quant à la valeur de la variable 1, de sorte qu'en cas d'ordre de répétition de trame, la boucle 53 n'est pas exécutée. Dit autrement, les de cadence tbRepeat, tbMove et tbSkip ne sont pas mis à jour. La trame répétée est ainsi ignorée et ne perturbe pas davantage la détection de cadence.
Si la variable est nulle, c'est-à-dire si aucun ordre de répétition ni de suppression de trame n'a été appliqué au niveau de la trame courante, alors la boucle 53 est exécutée une seule fois (étapes 60 et 59 d'incrémentation et de test).
Si la variable i est initialement égale à -1, c'est-à-dire si un ordre de suppression de trame été appliqué au niveau de la trame courante, alors la boucle 53 est exécutée deux fois (étapes 60 et 59 d'incrémentation et de test).
Lors d'une exécution de la boucle 53, on procède à des décalages d'un bit des registres de cadence tbRepeat, tbMove et tbSkip (étape 54).
Si c'est la première fois que la boucle est exécutée (étapes d'initialisation 52 et de test 61), alors on écrit dans les espaces libérés par les décalages des registres tbSkip et tbRepeat une valeur nulle et la valeur courante du bit bRepeat pour ce bloc respectivement (étape 56). Le registre tbRepeat est ainsi mis à jour.
Le registre tbMove est également mis à jour en écrivant dans l'espace libéré par le décalage de l'étape 54 la valeur du bit bMove (étape 57).
Avantageusement, cette écriture n'est pas effectuée si aucun mouvement n'est détecté entre les trois dernières trames de même parité (test 62 quant aux dernières valeurs du registre tbRepeat). On suppose alors qu'un éventuel bit bMove à 1 indiquant un mouvement inter-trames résulterait d'une erreur de détection et on préfère affecter au dernier bit du registre bMove une valeur nulle (étape 58).
Avantageusement, l'étape 57 n'est pas non plus exécutée si un ordre de suppression de trame a été appliqué (test 62 quant à l'avant-dernière valeur du registre tbSkip). On suppose en effet que cette suppression conduit à une estimation faussée du bit bMove lors des comparaisons de trame, et on préfère affecter au dernier bit du registre bMove une valeur nulle (étape 58).
Si la boucle 53 est exécutée pour la deuxième fois, c'est-à-dire si un ordre de suppression de trame été appliqué au niveau de la trame courante (étapes 60 et 61), les décalages d'un bit des registres de cadence tbRepeat, tbMove et tbSkip de l'étape 54 sont effectués à nouveau. Du fait de la signalisation de l'ordre de suppression de trame, ces registres sont ainsi décalés deux fois. On affecte aux bits ainsi libérés des registres tbRepeat et tbMove une valeur nulle (étape 55). Le dernier bit du registre tbSkip est positionné (étape 55). Ce dernier positionnement permet de prendre en compte la signalisation de l'ordre de suppression de trame à un stade ultérieur, typiquement lors de la recherche de motif de cadence effectuée par le FMD.

**Détecteur de mode film (FMD)**

Pour chaque bloc, le FMD effectue une recherche de motifs parmi les bits du registre tbMove.
En effet, pour par exemple une région résultant d'une conversion 3:2, le registre tbMove correspondant peut comprendre, outre des '0' significatifs d'une absence de mouvement au niveau de la région, des motifs '10010'. Pour une région résultant d'une acquisition vidéo, on n'observera probablement pas de motifs à proprement parler, mais des séquences de '1'. Le tableau ci-dessous montre quelques exemples de conversions et les motifs associés :

| Nom | Longueur du motif | Motif | Usage |
|---|---|---|---|
| « 2:2 » | 2 | « 10 » | Conversion d'images film |
| « 3:2 » | 5 | « 10010 » | Conversion d'images film |
| « 2:2:2:4 » | 10 | « 1010101000 » | DVCAM |
| « 2:3:3:2 » | 10 | « 1010010010 » | DVCAM |
| « 5:5 » | 10 | « 1000010000 » | Animation |
| « 6:4 » | 10 | « 1000001000 » | Animation |
| « 3:2:3:2:2» | 12 | « 100101001010 » | Diffusion accélérée pour laisser davantage de temps aux publicités |
| « 8:7 » | 15 | «100000001000000 » | Animations japonaises |

La recherche de motifs met en oeuvre un certain nombre de registres de motifs de cadence. On peut citer, pour chaque motif détectable :

- un registre de par exemple 20 bits tbPhase destiné à recevoir ledit motif, par exemple « 10010 » ;
- un registre ucLength de par exemple 8 bits pour mémoriser la longueur du motif, par exemple 5, et
- un registre ucDelay de par exemple 8 bits, pour mémoriser un paramètre de longueur intervenant dans le délai de la détection, par exemple, la longueur des flots de bits de cadence ("cadence bit-stream" en anglais) auxquels le contenu du registre tbMove est comparé bit par bit.

Pour chaque conversion détectable, et pour chaque phase de cadence, le FMD génère un flot de bits de cadence, par exemple les cinq flots «1001010010... », « 0010100101001... », « 010100101001 ... », « 101001010010... » et « 01001010010... » dans le cas d'une conversion 3:2. Si l'un de ces flots de bits concorde avec le flot de bits mémorisé dans le registre tbMove, alors une cadence film est détectée. On peut utiliser l'équation logique suivante:

bHit1 = (bPhase AND bMove) OR (NOT(bPhase) AND NOT(bMove)) OR (bSkip),
où bHit1 est un bit de succès représentant une concordance au niveau d'un bit,
où bMove représente le bit du registre tbMove comparé,
où bPhase est la valeur du registre tbPhase pour une phase de cadence donnée, compte tenu du paramètre de longueur ucDelay. Dit autrement, pour un bit bMove du registre tbMove donné, bPhase représente la valeur attendue de ce bit pour un motif de cadence donné et une phase de cadence donnée,
et où bSkip représente la valeur du bit du registre tbSkip correspondant au bit bMove comparé.

On remarque que si la signalisation d'ordres de suppression de trames indique qu'une suppression a préalablement été effectuée, alors la comparaison est automatiquement un succès (bHit1=1). Les ordres de suppression de trames sont ainsi pris en compte lors des comparaisons.

Lorsque, pour un bloc donné, tous les bits d'un flot de longueur définie dans registre ucDelay concordent avec les bits du registre tbMove de ce bloc, le drapeau bFilmMode de ce bloc est positionné, et un indice du motif correspondant à ce flot est mémorisé dans le registre ucPattern de ce bloc. La phase de cadence correspondant au flot donné est mémorisée dans un registre ucPhase.

On considère alors que la cadence est verrouillée, c'est-à-dire qu'il ne suffit pas d'un bit bHit1 de succès à zéro pour abaisser le drapeau bFilmMode. On utilise un bit bHit2 défini ci-dessous.

Lorsque le drapeau bFilmMode est positionné à '1', l'indice du motif et la phase de cadence respectivement mémorisés dans les registres ucPattern et ucPhase sont utilisés pour générer un prochain bit attendu bPhase. Ce bit attendu est comparé à une phase de mouvement détectable afin de repérer une éventuelle rupture de cadence. On peut utiliser l'équation logique suivante :

$$bHit2 = bHit1 \ OR \ (NOT(bMove)) \qquad\qquad (1)$$

Dit autrement, même dans le cas où bHit1 = 0, si aucun mouvement n'est détecté, on ne détecte pas de non concordance. On considère en effet qu'une image fixe ne constitue pas une condition de rupture.

En cas de rupture de cadence pour un bloc, c'est-à-dire bHit2 = 0, le drapeau bFilmMode correspondant à ce bloc est remis à zéro. Une détection de mode film recommence pour ce bloc, avec une recherche de motif pour chaque phase de cadence de chaque motif détectable.

Avantageusement, le registre tbRepeat mémorisant une séquence de mouvements entre trames de même parité est également utilisé. On peut par exemple comparer les deux derniers mouvements de phase attendus, lus dans le registre tbPhase, à la dernière valeur du registre tbRepeat, selon l'équation :

bHit3 = ((NOT(bPhase[0]) AND (NOT(bPhase[1]) AND bRepeat) OR ((bPhase[0] OR bPhase[1]) AND (NOT(bRepeat)) OR bSkip,

où bHit3 est un bit de succès représentant une concordance au niveau d'un bit,
où bPhase[0] représente la phase de mouvement attendue entre les trames successives (n) et (n-1),
où bPhase[1] représente la phase de mouvement attendue entre les trames successives (n-1) et (n-2),
et où une valeur de bRepeat à 1 représente l'absence de mouvement entre les trames de même parité (n) et (n-2).

On remarque que la encore, si la signalisation d'ordres de suppression de trames indique qu'une suppression a préalablement été effectuée, alors la comparaison est automatiquement un succès (bHit3=1). Les ordres de suppression de trames sont ainsi pris en compte lors des comparaisons.

La valeur du bit bHit3 peut intervenir comme condition de verrouillage par exemple.

Avantageusement, on peut utilise une connaissance a priori du format de la source pour limiter le nombre de motifs de cadence pour lesquels on effectue une recherché sur l'historique tbMove. Par exemple, si on sait qu'au moins une partie de l'image provient d'une source film à 50 images par secondes et que le format d'affichage est également à 50 images par seconde, on peut effectuer des recherches pour le motif 2:2 seulement.

## Revendications

**1.** Procédé de détection de cadence d'une séquence de trames vidéo, basé sur une recherche d'au moins un motif de cadence dans une séquence de bits représentatifs du mouvement d'au moins une partie de trame d'une trame à l'autre de la séquence de trames, le procédé comprenant :

la mémorisation de la séquence de trames dans une mémoire tampon ;
la détection de la cadence de la séquence de trames à l'aide d'un détecteur de cadence agencé pour recevoir des trames fournies à partir de la mémoire tampon sous la commande d'un processeur ;
l'application par le processeur, sur la base de la cadence détectée, d'ordres de suppression (Vskip) et/ou d'ordres de répétition de trames (Vrepeat) aux trames de la séquence de trames fournie en entrée du détecteur de cadence, et l'indication par le processeur au détecteur de cadence des suppressions et/ou répétition de trames effectuées pour prise en compte par le détecteur de cadence.

**2.** Procédé de détection de cadence selon la revendication 1, dans lequel la signalisation d'ordres de suppression et/ou d'ordres de répétition de trames comprend une signalisation d'ordres de régulation de trames (C) appliqués aux trames de la séquence de trames par une boucle de régulation de flux (13).

**3.** Procédé de détection de cadence selon l'une quelconque des revendications 1 et 2, dans lequel la signalisation d'ordres de suppression et/ou d'ordres de répétition de trames comprend une signalisation d'ordres réguliers de suppression et/ou d'ordres réguliers de répétition de trames appliqués lors d'une conversion de format de balayage.

**4.** Procédé de détection de cadence selon l'une quelconque des revendications 1 à 3, comprenant, pour chaque trame une étape de mise à jour (53) de la séquence de bits représentatifs du mouvement, ladite étape de mise à jour utilisant la signalisation d'ordres de suppression (Vskip) et/ou d'ordres de répétition de trames (Vrepeat).

**5.** Procédé de détection de cadence selon l'une quelconque des revendications 1 à 4, comprenant, pour chaque trame une étape de comparaison de la séquence de bits représentatifs du mouvement à une pluralité de flots de bits, chaque flot de bits correspondant à un motif de cadence et à une phase de cadence donnés, et dans lequel ladite étape de comparaison utilise la signalisation d'ordres de suppression et/ou d'ordres de répétition de trames.

**6.** Dispositif de détection de cadence (31) d'une séquence de trames vidéo, comprenant :

un processeur ;

une mémoire tampon pour mémoriser la séquence de trames ; et,

un détecteur de cadence avec des moyens de recherche (43) d'au moins un motif de cadence dans une séquence de bits représentatifs du mouvement d'au moins une partie de trame d'une trame à l'autre de la séquence de trames pour détecter la cadence de la séquence de trames,

dans lequel,

le détecteur de cadence est agencé pour recevoir des trames fournies à partir de la mémoire tampon sous la commande du processeur ; et,

le processeur est agencé pour appliquer, sur la base de la cadence détectée, des ordres de suppression (Vskip) et/ou des ordres de répétition de trames (Vrepeat) aux trames de la séquence de trames fournie en entrée du détecteur de cadence, et pour indiquer au détecteur de cadence les suppressions et/ou répétition de trames effectuées pour prise en compte par le détecteur de cadence.

7.  Système de traitement d'une séquence de trames vidéo, comprenant

un dispositif de détection de cadence (17, 25, 31) selon la revendication 6, et

un dispositif de traitement (18, 21, 32) couplé au dispositif de détection de cadence.

8.  Système de traitement selon la revendication 7, dans lequel le dispositif de traitement comprend un dispositif de désentrelacement (18, 21, 32).

9.  Système de traitement selon l'une quelconque des revendications 7 et 8, comprenant en outre

une boucle de régulation de flux (13) pour adapter le format de la séquence de trames à un format de référence, et dans lequel

la boucle de régulation de flux est agencée pour générer des ordres de régulation de trames (C) à appliquer aux trames de la séquence de trames, et

le dispositif de détection de cadence est agencé pour recevoir une signalisation des ordres de régulation de trames.

10.  Poste de télévision comprenant un système de traitement selon l'une quelconque des revendications 7 à 9.

11.  Décodeur de télévision numérique comprenant un système de traitement selon l'une quelconque des revendications 7 à 9.

**Patentansprüche**

1.  Verfahren zur Detektion der Bildwechselrate einer Halbbildersequenz auf Basis einer Suche nach mindestens einem Bildwechselrate-Motiv in einer Sequenz von Bits, die repräsentativ sind für die Bewegung mindestens eines Halbbildabschnitts eines Halbbilds der Halbbildersequenz zum anderen, wobei das Verfahren aufweist:

die Speicherung der Halbbildersequenz in einem Pufferspeicher;

die Detektion der Bildwechselrate der Halbbildersequenz mit Hilfe eines Bildwechselrate-Detektors, der konfiguriert ist, um Halbbilder zu empfangen, die unter dem Befehl eines Prozessors aus dem Pufferspeicher zugeführt werden;

die von dem Prozessor auf Basis der detektierten Bildwechselrate durchgeführte Anwendung von Befehlen zur Unterdrückung von Halbbildern (Vskip) und/oder Befehlen zur Wiederholung von Halbbildern (Vrepeat) auf die Halbbilder der am Eingang des BildwechselrateDetektors bereitgestellten Halbbildersequenz und die von dem Prozessor an den Bildwechselrate-Detektor ausgegebene Meldung über durchgeführte Halbbildunterdrückungen und/oder Halbbildwiederholungen, so dass diese von dem Bildwechselrate-Detektor berücksichtigt werden.

2.  Verfahren zur Detektion der Bildwechselrate nach Anspruch 1, in welchem die Befehlssignale zur Unterdrückung von Halbbildern und/oder zur Wiederholung von Halbbildern Befehlssignale zur Regelung von Halbbildern (C) aufweisen, die von einer Flussregelungsschleife (13) auf die Halbbilder der Halbbildersequenz angewendet werden.

3.  Verfahren zur Detektion der Bildwechselrate nach einem der Ansprüche 1 und 2, in welchem die Befehlssignale zur Unterdrückung und/oder Wiederholung von Halbbildern reguläre Befehlssignale zur Unterdrückung und/oder Wiederholung von Halbbildern aufweisen, die bei einer Umwandlung eines Abtastformats angewendet werden.

4.  Verfahren zur Detektion der Bildwechselrate nach einem der Ansprüche 1 bis 3, das für jedes Halbbild aufweist:

einen Aktualisierungsschritt (53) zum Aktualisieren der Sequenz von Bits, die repräsentativ sind für die Bewegung, wobei der Aktualisierungsschritt die Befehlssignale zur Unterdrückung (Vskip) und/oder Wiederholung (Vrepeat) von Halbbildern verwendet.

5.  Verfahren zur Detektion der Bildwechselrate nach einem der Ansprüche 1 bis 4, das für jedes Halbbild aufweist:

einen Vergleichsschritt zum Vergleichen der Sequenz von Bits, die repräsentativ für die Bewegung sind, mit mehreren Bitströmen, wobei jeder Bitstrom einem gegebenen Bildwechselrate-Motiv und einer gegebenen Bildwechselrate-Phase entspricht, und in welchem der Vergleichsschritt die Befehlssignale zur Unterdrückung und/oder Wiederholung von Halbbildern verwendet.

6.  Bildwechselrate-Detektionsvorrichtung (31) zur Detektion der Bildwechselrate einer Videohalbbildersequenz mit:

einem Prozessor;
einem Pufferspeicher zum Speichen der Halbbildersequenz; und
einem Bildwechselrate-Detektor mit Einrichtungen (43) zum Suchen nach mindestens einem Bildwechselrate-Motiv in einer Sequenz von Bits, die repräsentativ sind für die Bewegung mindestens eines Halbbildabschnitts eines Halbbilds der Halbbildersequenz zum anderen, um die Bildwechselrate der Halbbildersequenz zu detektieren,
in welcher
der Bildwechselrate-Detektor konfiguriert ist, um Halbbilder zu empfangen, die unter dem Befehl des Prozessors aus dem Pufferspeicher zugeführt werden; und
der Prozessor konfiguriert ist, um auf Basis der detektierten Bildwechselrate Befehle zur Halbbildunterdrückung (Vskip) und/oder Befehle zur Halbbildwiederholung (Vrepeat) auf Halbbilder der am Eingang des Bildwechselrate-Detektors bereitgestellten Halbbildersequenz anzuwenden und dem Bildwechselrate-Detektor die durchgeführten Halbbildunterdrückungen und/oder Halbbildwiederholungen zu melden, so dass diese von dem Bildwechselrate-Detektor berücksichtigt werden.

7.  Verarbeitungssystem zur Verarbeitung einer Videohalbbildersequenz mit:

einer Bildwechselrate-Detektionsvorrichtung (17,25,31) nach Anspruch 6 und einer mit der Bildwechselrate-Detektionsvorrichtung gekoppelten Verarbeitungsvorrichtung (18,21,32).

8.  Verarbeitungssystem nach Anspruch 7, in welchem die Verarbeitungsvorrichtung eine Vorrichtung (18,21,32) zur Entschachtelung aufweist.

9.  Verarbeitungssystem nach einem der Ansprüche 7 und 8, ferner mit
einer Flussregelungsschleife (13) zum Anpassen des Formats der Halbbildersequenz an ein Referenzformat, und in welchem die Flussregelungsschleife konfiguriert ist, um auf die Halbbilder der Halbbildersequenz anzuwendende Befehle zur Regelung der Halbbilder (C) zu erzeugen, und
die Bildwechselrate-Detektionsvorrichtung konfiguriert ist, um Befehlssignale zur Regelung von Halbbildern zu empfangen.

10. Fernsehgerät mit einem Verarbeitungssystem nach einem der Ansprüche 7 bis 9.

11. Digitaler Fernseh-Dekodierer mit einem Verarbeitungssystem nach einem der Ansprüche 7 bis 9.

## Claims

1.  A method for cadence detection in a sequence of video fields, based on a search for at least a cadence pattern in a sequence of bits representative of the motion in at least a part of a field from one field to another in the field sequence, the method comprising:

- storing the field sequence in a buffer memory;
- detecting cadence in the field sequence using a cadence detection device arranged to receive fields from the buffer memory under control by a processor;
- the processor using the detected cadence for signaling field skip commands (Vskip) and/or field repeat commands (Vrepeat) which are previously applied to the fields in the field sequence input to the cadence detection device.

2. The cadence detection method according to claim 1, wherein
the signaling of field skip and/or field repeat commands comprises a signaling of field control commands (C) applied to the fields in the field sequence by a flow control loop (13).

3. The cadence detection method according to either of claims 1 and 2, wherein
the signaling of field skip and/or field repeat commands comprises a signaling of field skip commands and/or field repeat commands regularly applied during a scan format conversion.

4. The cadence detection method according to any of claims 1 to 3, comprising, for each field,
a step (53) for updating the sequence of bits representative of the motion, with said step using the signaling of field skip commands (Vskip) and/or field repeat commands (Vrepeat).

5. The cadence detection method according to any of claims 1 to 4, comprising, for each field,
a step for comparing the sequence of bits representative of the motion to multiple bitstreams, each bitstream corresponding to a given cadence pattern and cadence phase, wherein said step uses the signaling of field skip commands and/or field repeat commands.

6. A cadence detection device (31) for detecting a cadence in a sequence of video fields, comprising
a processor ;
a buffer memory for storing the field sequence; and,
a cadence detection device with means (43) of searching at least one cadence pattern in a sequence of bits representative of the motion in at least a part of the field from one field to another in the field sequence, for detecting cadence in the field sequence,
wherein
the cadence detection device is arranged to receive fields from the buffer memory under control by the processor; and,
the processor is arranged to use the detected cadence for signaling field skip commands (Vskip) and/or field repeat commands (Vrepeat) which are previously applied to the fields in the field sequence input to the cadence detection device.

7. A processing system for processing a sequence of video fields, comprising
a cadence detection device (17, 25, 31) according to claim 6, and
a processing device (18, 21, 32) coupled to the cadence detection device.

8. The processing system according to claim 7, wherein the processing device comprises a deinterlacing device (18, 21, 32).

9. The processing system according to either of claims 7 and 8, further comprising
a flow control loop (13) for adapting the format of the field sequence to a reference format,
and wherein
the flow control loop is arranged to generate field control commands (C) to be applied to the fields in the field sequence, and
the cadence detection device is arranged to receive a signaling of field control commands.

10. A television set comprising a processing system according to any of claims 7 to 9.

11. A digital television decoder comprising a processing system according to any of claims 7 to 9.

FIG.1.

FIG.2.

EP 1 868 383 B1

31

Y

Vsync
Vskip
Vrepeat

DÉTECTEUR
DE CADENCE

CD(n–1)          CP

YUV          DEI

32

## FIG.3.

41          42          31          43

Y(n–1)
Y(n)
Y(n+1)

MD

B(n)

DCU          FMD

Vskip
Vrepeat

Vsync          ctrl          44

CD(n–1)    CP

## FIG.4.

FIG.5.

**EP 1 868 383 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1198137 A